# EUROPÄISCHE PATENTSCHRIFT

(11) **EP 3 120 095 B1**
(45) Veröffentlichungstag und Bekanntmachung des Hinweises auf die Patenterteilung: **26.09.2018**
(21) Anmeldenummer: 15708482.3
(22) Anmeldetag: 03.03.2015
(51) Int. Cl.: F28D 9/00, F28D 1/03

(54) **PLATTENWÄRMETAUSCHER INSBESONDERE FÜR EIN BRENNSTOFFBEFEUERTES HEIZGERÄT**
PLATE HEAT EXCHANGER IN PARTICULAR FOR A FUEL-FIRED HEATER
ÉCHANGEUR DE CHALEUR À PLAQUES NOTAMMENT POUR APPAREIL CHAUFFANT CHAUFFÉ PAR COMBUSTIBLE

(30) Priorität: 20.03.2014 AT 501992014
(43) Veröffentlichungstag der Anmeldung: 25.01.2017
(73) Patentinhaber: Vaillant GmbH, 42859 Remscheid (DE)
(72) Erfinder: HERTGERS, Christiaan, NL-7218 MD Almen (NL); KUPKA, Thomas, 51467 Bergisch Gladbach (DE)
(74) Vertreter: Hocker, Thomas
(86) Internationale Anmeldenummer: PCT/EP2015/054394
(87) Internationale Veröffentlichungsnummer: WO 2015/139946

(56) Entgegenhaltungen:
- EP-A2- 1 808 218
- WO-A1-2007/083862
- DE-A1-102006 049 106
- US-A- 4 002 201

## Beschreibung

Die Erfindung bezieht sich auf eine Brennstoff oder brenngasbetriebene Heizungsanlage gemäß dem Oberbegriff des Anspruchs 1. WO 2007/083862 offenbart eine derartige Heizungsanlage.

Bei brennstoffbefeuerten Heizgeräten wird ein Brenngas oder Brennstoff (im Folgenden zusammenfassend auch Brennstoff genannt) verbrannt. Diese heißen Abgase werden dann an einem wasserführenden Primärwärmetauscher abgekühlt, wobei ein Wärmeaustausch vom Abgas auf das Wasser stattfindet. Das Wasser ist zumeist Wasser eines Heizungskreislaufs, so dass die Abgase minimal auf die Temperatur des Heizungsrücklaufs abgekühlt werden. Um weitere thermische Energie des Abgases zu nutzen, sind Rekuperatoren bekannt, bei denen in einem nachgeschalteten Wärmetauscher kälteres Frischwasser (Brauchwasser) als kühlendes Medium dient.

Diese Rekuperatoren werden zumeist als zusätzliches Bauelement dem Heizgerät zugefügt und aufgrund der räumlichen Auslastung der Heizgeräte im Gehäuseinneren außerhalb des Geräts angekoppelt.

WO 2007/083862 A1 offenbart einen Plattenwärmetauscher mit mehreren parallelen Elementen, die wiederum jeweils aus 3 Platten bestehen. Zwischen diesen strömt parallel Heizungswasser in Heizungswasserkanälen sowie Brauchwasser. Derartige Elemente sind mittels Abgaswegen von dem nächsten gleichartigen Element getrennt, so dass durch den Wärmetauscher alternierend Abgas, Brauchwasser sowie Heizungswasser strömt. Diese drei Medien sind auf unterschiedlichem Temperaturniveau. Durch die Integration der drei Medien wird das Abgas zwar mehr abgekühlt als in einem reinen Heizungswasser-Wärmetauscher, aber dennoch weniger als in einem reinen Brauchwasser-Wärmetauscher.

Eine ähnliche Vorrichtung zeigt D4 US 4002201.

DE 10 2006 049 106 A1 zeigt einen Wärmetauscher, bei dem ein und derselbe Plattenkanal eines Wärme abgebenden Medium (Abgas) sowohl mit dem wärmeren, als auch kälteren Kühlmedium in Berührung steht.

Aus EP 2080976 A1 ist ein Plattenwärmetauscher bekannt, bei dem ein Wasserkreislauf sowohl in einem ersten Teilbereich mit einem Solkreislauf, als auch in einem zweiten Teilbereich mit einem Kältemittelkreislauf im Wärmeaustausch steht.

Der Erfindung liegt die Aufgabe zugrunde, eine platzsparende Integration eines Rekuperators zu ermöglichen, welche zugleich möglichst wenig zusätzliche Verrohrung und geringe Wärmeverluste gewährleistet.

Ein Heizgerät mit einem Plattenwärmetauscher verfügt bei letztgenanntem über mindestens zwei Teilwärmetauscher. In dem ersten Teilwärmetauscher gibt ein erstes Medium Wärme auf das zu erwärmende Medium ab. Im zweiten Teilwärmetauscher gibt ein zweites Medium Wärme auf das im ersten Teilwärmetauscher vorgewärmte, zu erwärmende Medium ab.

So kann ein Plattenwärmetauscher in einer erfindungsgemäßen Heizungsanlage derart eingesetzt werden, dass kaltes Brauchwasser als zu erhitzendes Medium zunächst von im Primärwärmetauscher der Heizungsanlage abgekühlten Abgas im ersten Teilwärmetauscher erwärmt wird und anschließend Heizungswasser im zweiten Teilwärmetauscher das Brauchwasser weiter erhitzt.

Vorteilhafte Ausgestaltungen ergeben sich durch die Merkmale der abhängigen Ansprüche.

So kann der Plattenwärmetauscher über weitere Teilwärmetauscher verfügen, in denen weitere Wärme abgebebnende Medien das Wärme aufnehmende Medium erhitzen. Hierdurch kann beispielsweise Wärme von einer Solaranlage oder aus Kondensat auf Brauchwasser übertragen werden.

Während für die Führung von Fluiden in der Regel der Ein- und Austritt über Rohre erfolgt, bietet sich bei Gasen eine großflächigere Durchströmung an. So können die Zwischenräume zwischen den Platten eines Teilwärmetauschers auf zwei gegenüberliegenden Seiten senkrecht zur Plattenhauptachse offen und an den beiden anderen gegenüberliegenden Seiten senkrecht zur Plattenhauptachse verschlossen sein. Bei oben beschriebenem Einsatz strömt dann Abgas auf einer Seite ein und auf der anderen Seite wieder aus dem Wärmetauscher.

Die Zwischenräume zwischen den Platten des ersten Teilwärmetauschers des Wärme aufnehmenden Mediums können mit den Zwischenräumen zwischen den Platten des zweiten Teilwärmetauschers des Wärme aufnehmenden Mediums über eine Verbindung innerhalb oder außerhalb des Plattenwärmetauschers fluidführend verbunden sein.

Bei einer erfindungsgemäßen Heizungsanlage, bei welcher der Plattenwärmetauscher zum Einsatz kommt, wird der erste Teilwärmetauscher des Plattenwärmetauschers bezüglich des ersten Wärme abgebenden Mediums über eine Abgasleitung mit dem Primärwärmetauscher des Heizungsbrenners und einer Abgasabführung in die Umgebung verbunden. Der zweite Teilwärmetauscher des Plattenwärmetauschers wird bezüglich des zweiten Wärme abgebenden Mediums mit der Vorlaufleitung und der Rücklaufleitung des Heizungskreislaufs der Heizungsanlage verbunden. Bezüglich des Wärme aufnehmenden Mediums wird der erste Teilwärmetauscher des Plattenwärmetauschers mit der Brauchwasserzulaufleitung der Heizungsanlage verbunden. Der zweite Teilwärmetauscher des Plattenwärmetauschers wird bezüglich des Wärme aufnehmenden Mediums mit der Brauchwasserzapfleitung (14) verbunden. Die Zwischenräume zwischen den Platten des ersten Teilwärmetauschers des Wärme aufnehmenden Mediums wird mit den Zwischenräumen zwischen den Platten des zweiten Teilwärmetauschers des Wärme aufnehmenden Mediums verbunden. Somit kann mittels abgekühltem Abgas Brauchwasser zunächst vorgewärmt werden, ehe mittels Heizungswasser das Brauchwasser weiter erwärmt wird.

Erfolgt eine Durchströmung mindestens eines Teilwärmetauschers im Gegenstrom, so kann ein besonders hoher Wirkungsgrad erzielt werden.

Wird der Plattenwärmetauscher derart in einer Heizungsanlage montiert, dass die Platten des Plattenwärmetauschers senkrecht angeordnet sind, so kann Kondensat über Schwerkraft aus dem Plattenwärmetauscher abgeführt werden.

Die Erfindung wird nun anhand der Figuren detailliert erläutert. Hierbei zeigen
Figur 1 eine erfindungsgemäße Heizungsanlage mit einem erfindungsgemäßen Plattenwärmetauscher zur Brauchwassererwärmung,
Figur 2 den erfindungsgemäßen Plattenwärmetauscher,

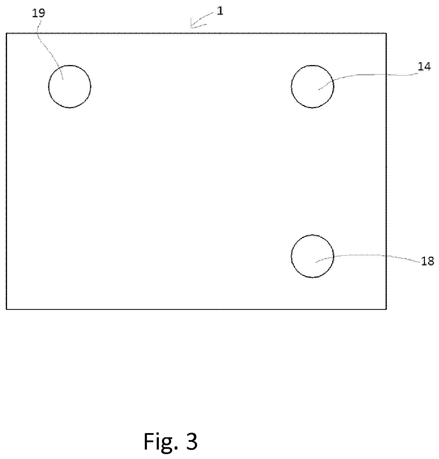

Figur 3 denselben erfindungsgemäßen Plattenwärmetauscher,

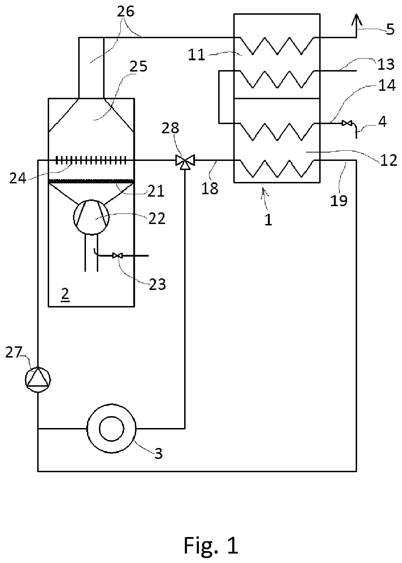

Figur 1 zeigt eine brenngasbetriebene Heizungsanlage 2 mit einem von einem Gebläse 22 unterstützten Brenner 21 und einem Primärwärmetauscher 24 zur Abkühlung der Abgase des Brenners 21. Eine Brenngasleitung, in der sich eine Gasarmatur 23 befindet, mündet in den Ansaugweg des Gebläses 22. Eine Vorlaufleitung 18 und eine Rücklaufleitung 19 sind mit dem Primärwärmetauscher 24 der Heizungsanlage 2 verbunden. Dem Primärwärmetauscher 24 schließt sich ein Abgassammler und eine Abgasleitung 26 an.

Die Vorlaufleitung 18 und die Rücklaufleitung 19 können alternativ mit einem Heizungskreislauf 3 oder einem erfindungsgemäßen Plattenwärmetauscher 1 verbunden werden, wobei die Umschaltung über ein Dreiwegeventil 28 erfolgt. In der Rücklaufleitung 19 befindet sich einen Umwälzpumpe 27, welche für einen Fluidstrom sorgt.

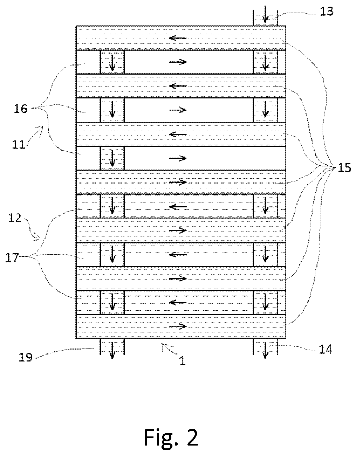

Details des Plattenwärmetauschers 1, der aus einer Vielzahl Platzten 30 aufgebaut ist, sind Figur 2 zu entnehmen. So ist der erste Teilwärmetauscher 11 des Plattenwärmetauschers 1 bezüglich des Abgases der Heizungsanlage 2, des ersten Wärme abgebenden Mediums 31, über die Abgasleitung 26 mit dem Primärwärmetauscher 24 und der Abgasabführung 5 verbunden. Der erste Teilwärmetauscher 11 des Plattenwärmetauschers 1 ist zugleich auf der anderen Wärmetauscherseite mit einer Brauchwasserzulaufleitung 13 für Brauchwasser als Wärme aufnehmendes Medium 32 in den dritten Zwischenräume 15 zwischen den Platten 30 verbunden.

Auf der Seite des zweiten Teilwärmetauschers 12 ist der Plattenwärmetauscher 1 einerseits mit dem Dreiwegeventil 28 in der Vorlaufleitung 18 sowie andererseits mit der Rücklaufleitung 19 verbunden, so dass Heizungswasser als Wärme abgebendes Medium 33 durch diese Seite des zweiten Teilwärmetauschers 12 strömen kann. Andererseits sind die ersten Zwischenräume 15 des zweiten Teilwärmetauschers 12 bezüglich des Wärme aufnehmenden Mediums 32 mit einer Brauchwasserzapfleitung 14 mit Zapfstelle 4 und einer Verbindung zum ersten Teilwärmetauscher 11 verbunden; diese Verbindung führt auf der Seite des ersten Teilwärmetauschers 11 zu der Brauchwasserzulaufleitung 13.

Die ersten Zwischenräume 16 zwischen den Platten 30 des ersten Teilwärmetauschers 11, welche von dem Abgas, als erstes Wärme abgebendes Medium 31 durchströmt werden, sind auf zwei gegenüberliegenden Seiten senkrecht zur Plattenhauptachse offen und an den beiden anderen gegenüberliegenden Seiten senkrecht zur Plattenhauptachse verschlossen, so dass das Abgas auf einer Seite parallel zu den Platten einströmen kann und auf der anderen Seite nach dem Wärmetausch wieder ausströmt. Die Abgasanschlüsse sind entsprechend zu gestalten. Das Brauchwasser wiederum strömt über eine Deckplatte in den Plattenwärmetauscher 1 ein und wird über Verbindungen von einem der dritten Zwischenräume 15 zum nächsten geführt.

Der zweite Teilwärmetauscher 12 wird im Gegenstrom in den dritten Zwischenräumen 15 von Brauchwasser sowie in den zweiten Zwischenräumen 17 von Heizungswasser durchströmt.

Die dritten Zwischenräume 15 zwischen den Platten 30 des ersten Teilwärmetauschers 11 sind innerhalb des Plattenwärmetauschers 1 mit den dritten Zwischenräumen 15 zwischen den Platten 30 des zweiten Teilwärmetauschers 12 des Wärme aufnehmenden Mediums 32 über eine interne Verbindung im üblichen Sinne eines Plattenwärmetauschers fluidführend verbunden. Alternativ könnte die Verbindung auch außerhalb des Plattenwärmetauschers 1über eine gesonderte Verbindung erfolgen; dies bietet sich dann an, wenn der Erfindungsgemäße Wärmetauscher aus zwei Einzelwärmetauschern zusammengesetzt wird.

Um ein Verstopfen der ersten Zwischenräume 16 mit Kondensat aus Wasserdampf des Abgases zu verhindern, muss einerseits der Abstand zwischen den Platten 30 der ersten Zwischenräume 16 geeignet gewählt werden. Ferner sollten die ersten Zwischenräume 16 möglichst so durchströmt werden, dass das Kondensat nach unten laufen kann; eine Montage, bei welcher die Platten 30 senkrecht stehen, ist hierbei besonders vorteilhaft.

Besonders vorteilhaft ist es, wenn die Abgasleitung 26 stromab des Primärwärmetauschers 24 unterhalb des Primärwärmetauschers 24 angeordnet ist und der erfindungsgemäße Plattenwärmetauscher 1 mit den ersten Zwischenräumen 16 zwischen den senkrecht angeordneten Platten 30 des ersten Teilwärmetauschers 11 verbunden ist. Unterhalb des ersten Teilwärmetauschers 11 ist dann die Abgasabführung 5 mit diesem verbunden. Bei einem Kombigerät für Brauch- und Heizungswasser kann dann ein erfindungsgemäßer Plattenwärmetauscher 1 anstelle eines Sekundärwärmetauschers zur Brauchwasserbereitung angebracht werden, so dass ansonsten auf eine gängige Konstruktion zurückgegriffen werden kann.

Die ersten Zwischenräume 16 besitzen vorzugsweise eine Spaltbreite von etwa 5 mm und werden im eingebauten Zustand vom Abgas von oben nach unten durchströmt, so dass Kondensat nach unten ausgeblasen wird.

Es ist möglich, weitere Teilwärmetauscher in den Plattenwärmetauscher 1 zu integrieren, um weitere Wärmequellen (beispielsweise Wärme von einer Solaranlage und / oder Kondensat) zu nutzen.

### Bezuqszeichenliste

Plattenwärmetauscher (1)
Heizungsanlage (2)
Heizungskreislauf 3
Zapfstelle 4
Abgasabführung (5)
erster Teilwärmetauscher (11)
zweiter Teilwärmetauscher (12)
Brauchwasserzulaufleitung (13)
Brauchwasserzapfleitung (14)
dritte Zwischenräume (15)
erste Zwischenräume (16)
zweite Zwischenräume (17)
Vorlaufleitung (18)
Rücklaufleitung (19)
Brenner (21)
Gebläse 22
Gasarmatur 23
Primärwärmetauscher (24)
Abgassammler 25
Abgasleitung (26)
Umwälzpumpe 27
Dreiwegeventil 28
Platten (30)
erstes Wärme abgebendes Medium (31)
erstes Wärme aufnehmendes Medium (32)
zweiten Wärme abgebenden Medium (33)

## Patentansprüche

1. Brennstoff- oder brenngasbetriebene Heizungsanlage (2) mit einem Brenner (21), einem Primärwärmetauscher (24) zur Abkühlung der Abgase des Brenners (21), einer Vorlaufleitung (18) und einer Rücklaufleitung (19), einer Abgasleitung (26), einer Brauchwasserzulaufleitung (13), einer Brauchwasserzapfleitung (14) sowie einer Abgasabführung (5) in Verbindung mit einem Plattenwärmetauscher (1) mit parallelen Platten (30), zum Wärmeaustausch über die Platten (30) zwischen in den Zwischenräumen strömenden Medien , wobei der Plattenwärmetauscher (1) aus mindestens zwei nebeneinander angeordneten Teilwärmetauschern (11, 12) besteht, wobei der erste Teilwärmetauscher (11) des Plattenwärmetauschers (1) bezüglich des ersten Wärme abgebenden Mediums (31) über die Abgasleitung (26) mit dem Primärwärmetauscher (24) und der Abgasabführung (5) verbunden ist sowie der zweite Teilwärmetauscher (12) des Plattenwärmetauschers (1) bezüglich des zweiten Wärme abgebenden Mediums (33) mit der Vorlaufleitung (18) und der Rücklaufleitung (19) verbunden ist, der erste Teilwärmetauscher (11) des Plattenwärmetauschers (1) bezüglich des Wärme aufnehmenden Mediums (32) mit der Brauchwasserzulaufleitung (13) verbunden ist sowie der zweite Teilwärmetauscher (12) des Plattenwärmetauschers (1) bezüglich des Wärme aufnehmenden Mediums (32) mit der Brauchwasserzapfleitung (14) verbunden ist, **dadurch gekennzeichnet, dass** die ersten Zwischenräume (16) zwischen den Platten (30) des ersten Teilwärmetauschers (11) zum Durchströmen von einem ersten Wärme abgebenden Medium (31) und die dritten Zwischenräume (15) zwischen den Platten (30) des ersten Teilwärmetauschers (11) zum Durchströmen eines ersten Wärme aufnehmenden Medium (32) alternierend angeordnet sind, die zweiten Zwischenräume (17) zwischen den Platten des zweiten Teilwärmetauschers (12) zum Durchströmen von einem zweiten Wärme abgebenden Medium (33) und die dritten Zwischenräume (15) zwischen den Platten (30) des zweiten Teilwärmetauschers (12) zum Durchströmen des Wärme aufnehmenden Medium (32) alternierend angeordnet sind , wobei die dritten Zwischenräume (15) zwischen den Platten (30) des ersten Teilwärmetauschers (11) zum Durchströmen des Wärme aufnehmenden Medium (32) mit den Zwischenräumen (15) zwischen den Platten (30) des zweiten Teilwärmetauschers (12) zum Durchströmen des Wärme aufnehmenden Medium (32) fluidführend verbunden sind, und die dritten Zwischenräume (15) zwischen den Platten (30) des ersten Teilwärmetauschers (11) des Wärme aufnehmenden Medium (32) mit den dritten Zwischenräumen (15) zwischen den Platten (30) des zweiten Teilwärmetauschers (12) des Wärme aufnehmenden Medium (32) verbunden sind.

2. Brennstoff- oder brenngasbetriebene Heizungsanlage (2) mit einem Plattenwärmetauscher (1) nach Anspruch 1, **dadurch gekennzeichnet, dass** mindestens einer der Teilwärmetauscher (11, 12) im Gegenstrom durchströmt wird.

3. Brennstoff- oder brenngasbetriebene Heizungsanlage (2) mit einem Plattenwärmetauscher (1) nach Anspruch 1 oder 2, **dadurch gekennzeichnet, dass** die Platten (30) senkrecht angeordnet sind.

4. Brennstoff- oder brenngasbetriebene Heizungsanlage (2) mit einem Plattenwärmetauscher (1) nach einem der Ansprüche 1 bis 3, **dadurch gekennzeichnet, dass** die Abgasleitung (26) stromab des Primärwärmetauschers (24) unterhalb des Primärwärmetauschers (24) angeordnet ist und mit die ersten Zwischenräume (16) zwischen den senkrecht angeordneten Platten (30) des ersten Teilwärmetauschers (11) verbunden ist.

5. Brennstoff- oder brenngasbetriebene Heizungsanlage (2) mit einem Plattenwärmetauscher (1) nach einem der Ansprüche 1 bis 4,
**dadurch gekennzeichnet, dass** der Plattenwärmetauscher (1) über mindestens einen weiteren Teilwärmetauscher verfügt, wobei die dritten Zwischenräume (15) zwischen den Platten (30) des zweiten Teilwärmetauschers (12) zum Durchströmen des Wärme aufnehmenden Mediums (32) mit den dritten Zwischenräumen (15) zwischen den Platten (30) des mindestens einen weiteren Teilwärmetauschers zum Durchströmen des Wärme aufnehmenden Medium fluidführend verbunden sind.

6. Brennstoff- oder brenngasbetriebene Heizungsanlage (2) mit einem Plattenwärmetauscher (1) nach einem der Ansprüche 1 bis 5,
**dadurch gekennzeichnet, dass** der die ersten Zwischenräume (16) zwischen den Platten (30) des ersten Teilwärmetauschers (11) zum Durchströmen von dem ersten Wärme abgebenden Medium (31) auf zwei gegenüberliegenden Seiten senkrecht zur Plattenhauptachse offen sind und an den beiden anderen gegenüberliegenden Seiten senkrecht zur Plattenhauptachse verschlossen sind.

7. Brennstoff- oder brenngasbetriebene Heizungsanlage (2) mit einem Plattenwärmetauscher (1) nach einem der Ansprüche 1 bis 6,
**dadurch gekennzeichnet, dass** die dritten Zwischenräume (15) zwischen den Platten (30) des ersten Teilwärmetauschers (11) zum Durchströmen des Wärme aufnehmenden Mediums (32) mit den dritten Zwischenräumen (15) zwischen den Platten (30) des zweiten Teilwärmetauschers (12) zum Durchströmen des Wärme aufnehmenden Mediums (32) über eine Verbindung innerhalb des Plattenwärmetauschers (1) fluidführend verbunden sind.

8. Brennstoff- oder brenngasbetriebene Heizungsanlage (2) mit einem Plattenwärmetauscher (1) nach einem der Ansprüche 1 bis 7,
**dadurch gekennzeichnet, dass** die dritten Zwischenräume (15) zwischen den Platten (30) des ersten Teilwärmetauschers (11) zum Durchströmen des Wärme aufnehmenden Mediums (32) mit den dritten Zwischenräumen (15) zwischen den Platten (30) des zweiten Teilwärmetauschers (12) zum Durchströmen des Wärme aufnehmenden Mediums (32) über eine Verbindung außerhalb des Plattenwärmetauschers (1) fluidführend verbunden sind.

## Claims

1. Fuel-fired or fuel-gas-fired heating system (2) with a burner (21), a primary heat exchanger (24) for cooling the exhaust gases of the burner (21), a forward run pipe (18) and a backward run pipe (19), an exhaust pipe (26), a service water supply pipe (13), a service water bleed pipe (14) and an exhaust gas discharge line (5) in connection with a plate heat exchanger (1) with parallel plates (30) for heat exchange via the plates (30) between media flowing in the interspaces, wherein the plate heat exchanger (1) comprises at least two partial heat exchangers (11, 12) disposed adjacently, wherein the first partial heat exchanger (11) of the plate heat exchanger (1) with respect to the first medium (31) emitting heat is connected via the exhaust pipe (26) with the primary heat exchanger (24) and the exhaust gas discharge line (5) and the second partial heat exchanger (12) of the plate heat exchanger (1) with respect to the second medium (33) emitting heat is connected with the forward run pipe (18) and the backward run pipe (19), the first partial heat exchanger (11) of the plate heat exchanger (1) with respect to the medium (32) absorbing heat is connected with the service water supply pipe (13) and the second partial heat exchanger (12) of the plate heat exchanger (1) with respect to the medium (32) absorbing heat is connected with the service water bleed pipe (14), **characterised in that** the first interspaces (16) between the plates (30) of the first partial heat exchanger (11) for the throughflow of a first medium (31) emitting heat and the third interspaces (15) between the plates (30) of the first partial heat exchanger (11) for the throughflow of a first medium (32) absorbing heat are disposed alternately, the second interspaces (17) between the plates of the second partial heat exchanger (12) for the throughflow of a second medium (33) emitting heat and the third interspaces (15) between the plates (30) of the second partial heat exchanger (12) for the throughflow of the medium (32) absorbing heat are disposed alternately, wherein the third interspaces (15) between the plates (30) of the first partial heat exchanger (11) for the throughflow of the medium (32) absorbing heat are connected hydraulically with the interspaces (15) between the plates (30) of the second partial heat exchanger (12) for the throughflow of the medium (32) absorbing heat, and the third interspaces (15) between the plates (30) of the first partial heat exchanger (11) of the medium (32) absorbing heat are connected with the third interspaces (15) between the plates (30) of the second partial heat exchanger (12) of the medium (32) absorbing heat.

2. Fuel-fired or fuel-gas-fired heating system (2) with a plate heat exchanger (1) according to claim 1, **characterised in that** at least one of the partial heat exchangers (11, 12) is flowed through countercurrently.

3. Fuel-fired or fuel-gas-fired heating system (2) with a plate heat exchanger (1) according to claim 1 or 2, **characterised in that** the plates (30) are disposed vertically.

4. Fuel-fired or fuel-gas-fired heating system (2) with a plate heat exchanger (1) according to one of claims 1 to 3, **characterised in that** the exhaust pipe (26) is disposed downstream from the primary heat exchanger (24) below the primary heat exchanger (24) and is connected with the first interspaces (16) between the vertically disposed plates (30) of the first partial heat exchanger (11).

5. Fuel-fired or fuel-gas-fired heating system (2) with a plate heat exchanger (1) according to one of claims 1 to 4, **characterised in that** the plate heat exchanger (1) has at least one further partial heat exchanger, wherein the third interspaces (15) between the plates (30) of the second partial heat exchanger (12) for the throughflow of the medium (32) absorbing heat are connected hydraulically with the third interspaces (15) between the plates (30) of the at least one further partial heat exchanger for the throughflow of the medium absorbing heat.

6. Fuel-fired or fuel-gas-fired heating system (2) with a plate heat exchanger (1) according to one of claims 1 to 5, **characterised in that** the first interspaces (16) between the plates (30) of the first partial heat exchanger (11) for the throughflow of the first medium (31) emitting heat are open on two oppositely disposed sides perpendicularly to the main axis of the plates, and are shut on the two other oppositely disposed sides perpendicularly to the main axis of the plates.

7. Fuel-fired or fuel-gas-fired heating system (2) with a plate heat exchanger (1) according to one of claims 1 to 6, **characterised in that** the third interspaces (15) between the plates (30) of the first partial heat exchanger (11) for the throughflow of the medium (32) absorbing heat are connected hydraulically with the third interspaces (15) between the plates (30) of the second partial heat exchanger (12) for the throughflow of the medium (32) absorbing heat via a connection within the plate heat exchanger (1).

8. Fuel-fired or fuel-gas-fired heating system (2) with a plate heat exchanger (1) according to one of claims 1 to 7, **characterised in that** the third interspaces (15) between the plates (30) of the first partial heat exchanger (11) for the throughflow of the medium (32) absorbing heat are connected hydraulically with the third interspaces (15) between the plates (30) of the second partial heat exchanger (12) for the throughflow of the medium (32) absorbing heat via a connection externally to the plate heat exchanger (1).

## Revendications

1. Installation de chauffage (2) utilisant du combustible ou du gaz combustible avec un brûleur (21), un échangeur de chaleur primaire (24) pour le refroidissement des gaz d'échappement du brûleur (21), une conduite aller (18) et une conduite retour (19), une conduite de gaz d'échappement (26), une conduite d'arrivée d'eau sanitaire (13), une conduite de distribution d'eau sanitaire (14) ainsi qu'une évacuation de gaz d'échappement (5) en liaison avec un échangeur de chaleur à plaques (1) avec des plaques parallèles (30), pour l'échange de chaleur par le biais des plaques (30) entre des fluides s'écoulant dans les espaces intermédiaires, dans laquelle l'échangeur de chaleur à plaques (1) se compose d'au moins deux échangeurs de chaleur partiels (11, 12) agencés l'un à côté de l'autre, dans laquelle le premier échangeur de chaleur partiel (11) de l'échangeur de chaleur à plaques (1) est raccordé par rapport au premier fluide (31) émettant de la chaleur par le biais de la conduite de gaz d'échappement (26) à l'échangeur de chaleur primaire (24) et à l'évacuation de gaz d'échappement (5) ainsi que le second échangeur de chaleur partiel (12) de l'échangeur de chaleur à plaques (1) est raccordé par rapport au second fluide (33) émettant de la chaleur à la conduite aller (18) et à la conduite retour (19), le premier échangeur de chaleur partiel (11) de l'échangeur de chaleur à plaques (1) est raccordé par rapport au fluide (32) recevant de la chaleur à la conduite d'arrivée d'eau sanitaire (13) ainsi que le second échangeur de chaleur partiel (12) de l'échangeur de chaleur à plaques (1) est raccordé par rapport au fluide (32) recevant de la chaleur à la conduite de distribution d'eau sanitaire (14), **caractérisée en ce que** les premiers espaces intermédiaires (16) sont agencés en alternance entre les plaques (30) du premier échangeur de chaleur partiel (11) pour le passage d'un premier fluide (31) émettant de la chaleur et les troisièmes espaces intermédiaires (15) entre les plaques (30) du premier échangeur de chaleur partiel (11) pour le passage d'un premier fluide (32) recevant de la chaleur, les deuxièmes espaces intermédiaires (17) sont agencés en alternance entre les plaques du second échangeur de chaleur partiel (12) pour le passage d'un second fluide (33) émettant de la chaleur et les troisièmes espaces intermédiaires (15) sont agencés en alternance entre les plaques (30) du second échangeur de chaleur partiel (12) pour le passage du fluide (32) recevant de la chaleur, dans laquelle les troisièmes espaces intermédiaires (15) sont raccordés par acheminement de fluide entre les plaques (30) du premier échangeur de chaleur partiel (11) pour le passage du fluide (32) recevant de la chaleur aux espaces intermédiaires (15) entre les plaques (30) du second échangeur de chaleur partiel (12) pour le passage du fluide (32) recevant de la chaleur,
et les troisièmes espaces intermédiaires (15) sont raccordés entre les plaques (30) du premier échangeur de chaleur partiel (11) du fluide (32) recevant de la chaleur aux troisièmes espaces intermédiaires (15) entre les plaques (30) du second échangeur de chaleur partiel (12) du fluide (32) recevant de la chaleur.

2. Installation de chauffage (2) utilisant du combustible ou du gaz combustible avec un échangeur de chaleur à plaques (1) selon la revendication 1, **caractérisée en ce qu'au** moins un des échangeurs de chaleur partiels (11, 12) est parcouru à contre-courant.

3. Installation de chauffage (2) utilisant du combustible ou du gaz combustible avec un échangeur de chaleur à plaques (1) selon la revendication 1 ou 2, **caractérisée en ce que** les plaques (30) sont agencées perpendiculairement.

4. Installation de chauffage (2) utilisant du combustible ou du gaz combustible avec un échangeur de chaleur à plaques (1) selon l'une quelconque des revendications 1 à 3, **caractérisée en ce que** la conduite de gaz d'échappement (26) est agencée en aval de l'échangeur de chaleur primaire (24) en dessous de l'échangeur de chaleur primaire (24) et est raccordée aux premiers espaces intermédiaires (16) entre les plaques (30) agencées perpendiculairement du premier échangeur de chaleur partiel (11).

5. Installation de chauffage (2) utilisant du combustible ou du gaz combustible avec un échangeur de chaleur à plaques (1) selon l'une quelconque des revendications 1 à 4, **caractérisée en ce que** l'échangeur de chaleur à plaques (1) dispose d'au moins un autre échangeur de chaleur partiel, dans laquelle les troisièmes espaces intermédiaires (15) sont raccordés par acheminement de fluide entre les plaques (30) du second échangeur de chaleur partiel (12) pour le passage du fluide (32) recevant de la chaleur aux troisièmes espaces intermédiaires (15) entre les plaques (30) d'au moins un autre échangeur de chaleur partiel pour le passage du fluide recevant de la chaleur.

6. Installation de chauffage (2) utilisant du combustible ou du gaz combustible avec un échangeur de chaleur à plaques (1) selon l'une quelconque des revendications 1 à 5, **caractérisée en ce que** les premiers espaces intermédiaires (16) sont ouverts entre les plaques (30) du premier échangeur de chaleur partiel (11) pour le passage du premier fluide (31) émettant de la chaleur sur deux côtés opposés perpendiculairement à l'axe principal de plaque et sont fermés sur les deux autres côtés opposés perpendiculairement à l'axe principal de plaque.

7. Installation de chauffage (2) utilisant du combustible ou du gaz combustible avec un échangeur de chaleur à plaques (1) selon l'une quelconque des revendications 1 à 6, **caractérisée en ce que** les troisièmes espaces intermédiaires (15) sont raccordés par acheminement de fluide entre les plaques (30) du premier échangeur de chaleur partiel (11) pour le passage du fluide (32) recevant de la chaleur aux troisièmes espaces intermédiaires (15) entre les plaques (30) du second échangeur de chaleur partiel (12) pour le passage du fluide (32) recevant de la chaleur par le biais d'une liaison dans l'échangeur de chaleur à plaques (1).

8. Installation de chauffage (2) utilisant du combustible ou du gaz combustible avec un échangeur de chaleur à plaques (1) selon l'une quelconque des revendications 1 à 7, **caractérisée en ce que** les troisièmes espaces intermédiaires (15) sont raccordés par acheminement de fluide entre les plaques (30) du premier échangeur de chaleur partiel (11) pour le passage du fluide (32) recevant de la chaleur aux troisièmes espaces intermédiaires (15) entre les plaques (30) du second échangeur de chaleur partiel (12) pour le passage du fluide (32) recevant de la chaleur par le biais d'une liaison en dehors de l'échangeur de chaleur à plaques (1).
